# EUROPEAN PATENT APPLICATION

(11) **EP 3 609 019 A1**
(43) Date of publication of application: **12.02.2020**
(21) Application number: 19190017.4
(22) Date of filing: 05.08.2019
(51) Int. Cl.: H01Q 1/24, H01Q 1/44, H01Q 1/08

(54) **ELECTRONIC DEVICE**

(30) Priority: 07.08.2018 CN 201810892297
(71) Applicant: Beijing Xiaomi Mobile Software Co., Ltd., Beijing 100085 (CN)
(72) Inventor: WANG, Qi, Beijing, Beijing 100085 (CN); WANG, Qiang, Beijing, Beijing 100085 (CN); DAI, Lin, Beijing, Beijing 100085 (CN)
(74) Representative: dompatent von Kreisler Selting Werner - Partnerschaft von Patent- und Rechtsanwälten mbB

(57) **Abstract**

The present disclosure relates to an electronic device, including: an electronic device body, an external antenna, and a built-in antenna; wherein the built-in antenna is disposed inside the electronic device body, and the external antenna is connected to the electronic device body via an interface of the electronic device body. For the electronic device provided by the present disclosure, when the user holds the electronic device (for example, with a single hand or with both hands), and it causes the radio frequency signal of the built-in antenna of the electronic device to be attenuated (i.e., the RF performance is degraded), the electronic device can perform communication through the external antenna inserted via the interface, to maintain the stability of the RF performance of the electronic device, and avoid data retransmission and packet loss and unsmooth game networking, etc., and thus improve the user experience. In particular, the game experience can be enhanced when the user holds the horizontally held electronic device to play MOBA, which can increase the differentiation of the electronic device from other electronic devices, and can improve the product competitiveness of the electronic device.

## Description

### CROSS REFERENCE TO RELATED APPLICATION

The present application is based on and claims priority to Chinese Patent Application No. 201810892297.5, filed on August 7, 2018, the entire contents of which are incorporated herein by reference.

### TECHNICAL FIELD

The present disclosure relates to the technical field of electronic devices, and in particular, to an electronic device.

### BACKGROUND

At present, with the development of mobile communication technology and the decrease of the mobile traffic charges, more and more users tend to play Multiplayer Online Battle Arena (MOBA) with terminals. In the related art, when a user plays MOBA with a terminal, the user will generally hold the terminal horizontally during the operation of the MOBA. Since the antennas of the terminal are usually disposed in the upper portion and the lower portion of the terminal respectively, when the user holds the horizontally placed terminal, the RF signal of the antennas may be attenuated, resulting in data retransmission and packet loss and unsmooth game networking, etc. Therefore, the user experience is rather low.

### SUMMARY

To overcome the problems in the related art, the present disclosure provides an electronic device. The technical solutions are as follows.

According to a first aspect of the embodiments of the present disclosure, there is provided an electronic device, including: an electronic device body, an external antenna, and a built-in antenna;

wherein the built-in antenna is disposed inside the electronic device body, and the external antenna is connected to the electronic device body via an interface of the electronic device body.

The technical solution provided by the embodiment of the present disclosure may include the following beneficial effects. In addition to the built-in antenna, an external antenna connected to the electronic device body via an interface is provided. Therefore, when the user holds the electronic device (for example, with a single hand or with both hands), and it causes the radio frequency signal of the built-in antenna of the electronic device to be attenuated (i.e., the RF performance is degraded), the electronic device can perform communication through the external antenna inserted via the interface, to maintain the stability of the RF performance of the electronic device, and avoid data retransmission and packet loss and unsmooth game networking, etc., and thus improve the user experience. In particular, the game experience can be enhanced when the user holds the horizontally held electronic device to play MOBA, which can increase the differentiation of the electronic device from other electronic devices, and can improve the product competitiveness of the electronic device.

Optionally, the external antenna includes an antenna body and a connecting wire;

one end of the connecting wire is connected to the antenna body, and the other end of the connecting wire is connected to the electronic device body via the interface.

The technical solution provided by the embodiment of the present disclosure may include the following beneficial effects. The antenna body of the external antenna is connected to the electronic device body via the connecting wire, therefore the antenna body of the external antenna can be further moved away from the user, so that the electronic device can perform communication through the external antenna inserted via the interface, to maintain the stability of the RF performance of the electronic device, and avoid data retransmission and packet loss and unsmooth game networking, etc., and thus improve the user experience and improve the anti-interference of the external antenna. In particular, the game experience can be enhanced when the user holds the horizontally held electronic device to play MOBA, which can increase the differentiation of the electronic device from other electronic devices, and can improve the product competitiveness of the electronic device.

Optionally, the interface is a charging interface.

The technical solution provided by the embodiments of the present disclosure may include the following beneficial effects. By reusing the charging interface to connect the external antenna and the electronic device body, the openings on the electronic device body can be reduced to improve the aesthetics of the appearance of the electronic device.

Optionally, the other end of the connecting wire has a shape adapted to the charging interface.

The technical solution provided by the embodiments of the present disclosure may include the following beneficial effects. By adapting the shape of the other end of the connecting wire to the charging interface, it can facilitate the connection of the external antenna to the electronic device body. The electronic device can perform communication through the external antenna inserted via the interface, to maintain the stability of the RF performance of the electronic device, and in addition to that, it can improve the usability of the external antenna, which can increase the differentiation of the electronic device from other electronic devices, and can improve the product competitiveness of the electronic device.

Optionally, the interface is an audio interface.

The technical solution provided by the embodiment of the present disclosure may include the following beneficial effects. By reusing the audio interface to connect the external antenna and the electronic device body, the openings on the electronic device body can be reduced to improve the aesthetics of the appearance of the electronic device.

Optionally, the other end of the connecting wire has a shape adapted to the audio interface.

The technical solution provided by the embodiments of the present disclosure may include the following beneficial effects. By adapting the shape of the other end of the connecting wire to the audio interface, it can facilitate the connection of the external antenna to the electronic device body. The electronic device can perform communication through the external antenna inserted via the interface, to maintain the stability of the RF performance of the electronic device, and in addition to that, it can improve the usability of the external antenna, which can increase the differentiation of the electronic device from other electronic devices, and can improve the product competitiveness of the electronic device.

Optionally, the connecting wire has a length between 5 cm and 20 cm.

The technical solution provided by the embodiment of the present disclosure may include the following beneficial effects. When the length of the connecting wire 16 is provided between 5 cm and 20 cm, the cost of the electronic device can be reduced while improving the anti-interference of the external antenna. Moreover, the electronic device will not be too cumbersome due to provision of the external antenna.

Optionally, the external antenna supports at least one of the network modes: a 2G network mode, a 3G network mode, a 4G network mode, a 5G network mode, and a WIFI network mode.

The technical solution provided by the embodiment of the present disclosure may include the following beneficial effects. The external antenna supports at least one of the network modes: a 2G network mode, a 3G network mode, a 4G network mode, a 5G network mode, and a WIFI network mode. It can support electronic devices with different network modes to utilize the external antenna to resolve the problem that the RF signal of the built-in antenna of the electronic device may be attenuated due to the user holding the electronic device, thereby improving the user experience and expanding the application scenario.

Optionally, the built-in antenna is provided in four.

The technical solution provided by the embodiments of the present disclosure may include the following beneficial effects. By providing four built-in antennas for an electronic device, when RF signals of one or more built-in antennas are attenuated due to the user holding the electronic device, the electronic device can perform communication through other built-in antennas. It can effectively alleviate the influence on the antennas of the electronic device from the user holding the electronic device with a single hand.

Optionally, a first built-in antenna and a second built-in antenna are disposed in an upper portion of the electronic device, and a third built-in antenna and a fourth built-in antenna are disposed in a lower portion of the electronic device.

The technical solution provided by the embodiment of the present disclosure may include the following effects. The first built-in antenna and the second built-in antenna are disposed in the upper portion of the electronic device, and the third built-in antenna and the fourth built-in antenna are disposed in the lower portion of the electronic device. It can effectively alleviate the influence on the built-in antennas of the terminal from the user holding the electronic device with a single hand.

It should be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a diagram of an application scenario according to an exemplary embodiment;
Fig. 2 is a schematic diagram of an electronic device according to an exemplary embodiment;
Fig. 3 is a schematic diagram of an electronic device according to another exemplary embodiment; and
Fig. 4 is a block diagram of an electronic device 1100, according to an exemplary embodiment.

### Description of the reference signs:

11: electronic device body;
12: external antenna;
13: built-in antenna;
14: interface;
15: antenna body;
16: connecting wire.

The embodiments of the present disclosure have been illustrated in the drawings, which will be described in more detail later. The drawings and the description are not intended to limit the scope of the concept of the present disclosure in any manner, but to illustrate the idea of the present disclosure to those skilled in the art with reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

When the position where the user holds the terminal is the position where the antenna of the terminal is disposed, the RF signal of the antenna may be attenuated, and the communication performance of the terminal may be lowered. Therefore, in the related art, a terminal manufacturer usually provides an RF (Radio Frequency, RF for short) antenna respectively in the upper portion of the terminal and the lower portion of the terminal, as the antennas of the terminal.

In this way, when the user holds the terminal, the terminal can select the antenna with less attenuation for communication according to the attenuation degree of the radio frequency signals of the two antennas, so as to effectively alleviate the influence on the antennas of the terminal from the user holding the terminal with a single hand. For example, when the user holds the lower portion of the terminal, the terminal can select the antenna in the upper portion of the terminal for communication, and when the user holds the upper portion of the terminal, the terminal can select the antenna in the lower portion of the terminal for communication

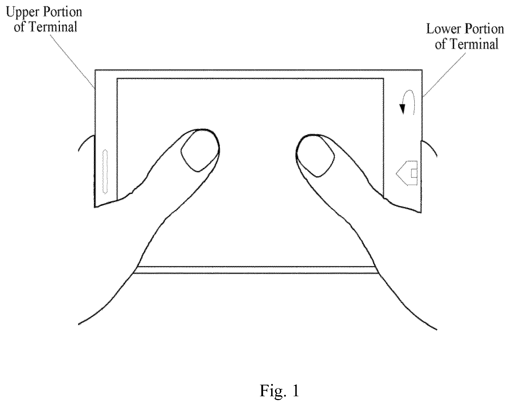

At present, with the development of mobile communication technology and the decrease of the mobile traffic charges, more and more users tend to play MOBA with terminals. Fig. 1 is a diagram of an application scenario according to an exemplary embodiment. As shown in Fig. 1, when the user uses the terminal to play MOBA, the user will generally hold the terminal horizontally with both hands to operate the MOBA.

This way of operating the MOBA may attenuate the RF signal of the antennas of the terminal, resulting in data retransmission and packet loss and unsmooth game networking, etc. Therefore, the user experience is rather low.

In view of the above problems, the present disclosure provides an electronic device that is provided with an external antenna in addition to a built-in antenna, and the external antenna is disposed outside the electronic device. Therefore, when the user holds the electronic device (for example, with a single hand or with both hands), and it causes the radio frequency signal of the built-in antenna of the electronic device to be attenuated (i.e., the RF performance is degraded), the electronic device can perform communication through the external antenna to maintain the stability of the RF performance of the electronic device, and avoid data retransmission and packet loss and unsmooth game networking, etc., and thus improve the user experience.

The technical solutions of the present disclosure will be described in detail below with specific embodiments. The following specific embodiments may be combined with each other, and the same or similar concepts or processes may not be described in some embodiments.

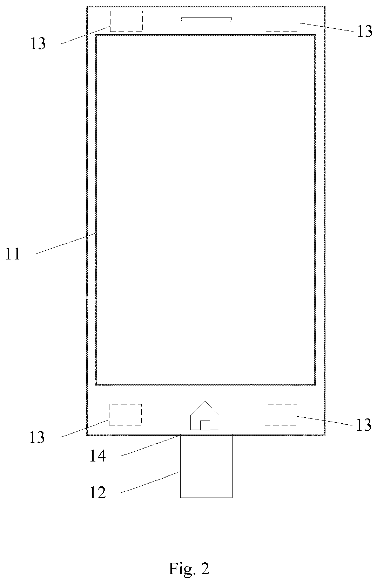

Fig. 2 is a schematic diagram of an electronic device according to an exemplary embodiment. As shown in Fig. 2, the electronic device may include: an electronic device body 11, an external antenna 12, and a built-in antenna 13.

The built-in antenna 13 is disposed inside the electronic device body 11, and the external antenna 12 is connected to the electronic device body 11 via an interface 14 of the electronic device body 11.

The present disclosure does not limit the number of the built-in antennas 13 and the position where the built-in antennas 13 is provided inside the electronic device body 11.

Fig. 2 is a schematic diagram shows that the number of the built-in antennas 13 is four, of which the first built-in antenna 13 and the second built-in antenna 13 are disposed in the upper portion of the electronic device body 11, and the third built-in antenna 13 and the fourth built-in antenna 13 are disposed in the lower portion of the electronic device body 11. The built-in antennas 13 disposed inside the electronic device body 11 are represented in broken lines. It should be understood that Fig. 2 is only a schematic diagram, and the present disclosure does not limit the number of the built-in antennas 13 and the positions where the built-in antennas 13 are disposed on the electronic device body 11, which may be adjusted according to actual conditions. For example, the number of the built-in antennas 13 is two, wherein the first built-in antenna 13 is disposed in an upper portion of the electronic device body 11 close to the frame, and the second built-in antenna 13 is disposed in a lower portion of the electronic device body 11 close to the frame.

Optionally, the external antenna 12 may be a RF antenna, or may be another antenna for implementing communication for the electronic device.

Optionally, the external antenna 12 can support at least one of the following network modes: a 2G network mode, a 3G network mode, a 4G network mode, a 5G network mode, and a WIFI network mode, etc., depending on the network mode supported by the electronic device.

In this way, for an electronic device supporting any network mode, by utilizing the external antenna 12, it can solve the problem that the RF signal of the built-in antenna 13 of the electronic device may be attenuated due to the user holding the electronic device. It can improve the user experience, and expand the application scenario.

Optionally, the shape of the external antenna 12 can be set according to user requirements. For example, the shape of the external antenna 12 may be a cylindrical shape, or the shape of the external antenna 12 may be a shape of a cartoon character, or the shape of the external antenna 12 may be a shape of fruit or the like.

In this way, in addition to maintaining the stability of the RF performance of the electronic device through the external antenna 12, it can improve the aesthetics of the appearance of the electronic device and thus improve the user experience.

The external antenna 12 is connected to the electronic device body 11 via the interface 14 of the electronic device body 11. The external antenna 12 can be plugged and played, and facilitate the user to operate. Correspondingly, the shape of the one end of the external antenna 12 connected to the electronic device body 11 is adapted to the interface 14 of the electronic device body 11, depending on the structure of the interface 14, and details of which are not described herein.

The interface 14 described above may be an interface dedicated to connecting the external antenna 12. In this scenario, the present disclosure does not limit the number of interfaces 14 and the position where the interface 14 is disposed on the electronic device body 11. For example, a plurality of interfaces 14 may be provided on the electronic device body 11 and may be disposed at different positions of the electronic device body 11, to be applicable to scenarios in which the user holds the electronic device in different ways. For example, when the user holds with both hands the electronic device which is horizontally placed, the user can connect the electronic device body 11 to the external antenna 12 via the interface 14 at the middle portion of the electronic device body 11, and through the external antenna 12, it can solve the problem that the RF signal of the built-in antenna 13 of the electronic device may be attenuated due to the user holding the electronic device.

The interface 14 can also be a charging interface or an audio interface on the electronic device body 11. In this way, the openings on the electronic device body 11 can be reduced to improve the aesthetics of the appearance of the electronic device. Fig. 2 shows a schematic diagram of an example in which a charging interface on the electronic device body 11 is taken as the interface 14.

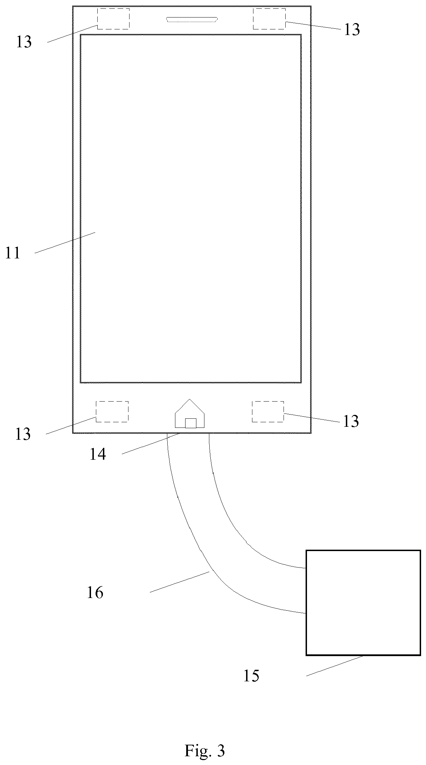

Fig. 3 is a schematic diagram of an electronic device according to another exemplary embodiment. As shown in Fig. 3, optionally, in another implementation, the external antenna 12 may include an antenna body 15 and a connecting wire 16.

One end of the connecting wire 16 is connected to the antenna body 15, and the other end of the connecting wire 16 is connected to the electronic device body 11 via the interface 14.

The shape of the other end of the connecting wire 16 may be specifically determined according to the structure of the interface 14.

For example, when the interface 14 is an interface on the electronic device body 11 dedicated to connecting the external antenna 12, the shape of the other end of the connecting wire 16 is adapted to the interface 14. When the interface 14 is a charging interface on the electronic device body 11, the shape of the other end of the connecting wire 16 is adapted to the charging interface. When the interface 14 is an audio interface on the electronic device body 11, the shape of the other end of the connecting wire 16 is adapted to the audio interface.

The length of the connecting wire 16 can be specifically set according to the needs of the user. For example, the length of the connecting wire 16 is between 5 cm and 20 cm. When the length of the connecting wire 16 is provided between 5 cm and 20 cm, the cost of the electronic device can be reduced while satisfying the user's needs.

Optionally, the external antenna 12 may further include a clip member, and the antenna body 15 is disposed on the clip member. The clip member may be, for example, a card holder, a buckle or the like.

In this way, when the external antenna 12 is used, the user can hook the external antenna 12 to the electronic device body 11 through the clip member to stabilize the connection between the electronic device body 11 and the external antenna 12.

The working principle of the electronic device provided by the present disclosure is described below.

Specifically, in step A, during the operation of the electronic device, the built-in antenna 13 and the external antenna 12 can be measured in real time, and the measurement result of the built-in antenna 13 and the measurement result of the external antenna 12 are obtained.

The measurement results can characterize the degree of attenuation of the RF signal of the antennas.

The measurement results may be, for example, Reference Signal Receiving Quality (RSRQ) or Reference Signal Receiving Power (RSRP).

The reference signal mentioned here may be sent by an object that communicates with the electronic device, for example, an access point (AP) in a network device or a WIFI network.

In Step B, after obtaining the measurement result of the built-in antenna 13 and the measurement result of the external antenna 12, the electronic device can compare the measurement results to select an antenna with better measurement result as the communication antenna to ensure the RF performance of the electronic device.

For example, if the measurement result of the external antenna 12 is larger than the measurement result of the built-in antenna 13, the external antenna 12 is used as a communication antenna of the electronic device, and communication is performed using the external antenna 12.

If the measurement result of the built-in antenna 13 is larger than the measurement result of the external antenna 12, the built-in antenna 13 is used as a communication antenna of the electronic device, and communication is performed using the built-in antenna 13.

If the measurement result of the built-in antenna 13 is equal to the measurement result of the external antenna 12, the built-in antenna 13 or the external antenna 12 is used as a communication antenna of the electronic device, and can be specifically selected according to the needs of the user.

In this way, when the RF signal of the built-in antenna 13 of the electronic device is attenuated due to the user holding the electronic device, the electronic device can communicate through the external antenna 12 to maintain the stability of the RF performance of the electronic device. It can avoid data retransmission, packet losss and unsmooth game networking, etc., and can improve the user experience.

The electronic device provided by the present disclosure, in addition to the built-in antenna, an external antenna connected to the electronic device body via an interface is provided. Therefore, when the user holds the electronic device (for example, with a single hand or with both hands), and it causes the radio frequency signal of the built-in antenna of the electronic device to be attenuated (i.e., the RF performance is degraded), the electronic device can perform communication through the external antenna inserted via the interface, to maintain the stability of the RF performance of the electronic device, and avoid data retransmission and packet loss and unsmooth game networking, etc., and thus improve the user experience. In particular, the game experience can be enhanced when the user holds the horizontally held electronic device to play MOBA, which can increase the differentiation of the electronic device from other electronic devices, and can improve the product competitiveness of the electronic device.

In addition, the method of ensuring the stability of the RF performance of the electronic device is not limited by the appearance, the size and the material of the electronic device (for example, a metal back cover). Especially for the future 5G network mode, in the case where the electronic device has limited space to place the antenna, and in the case where the antenna design is more difficult (the antenna needs to support more frequency bands, for example), the plug-and-play external antenna can be adopted. It can maintain the stability of the RF performance of the electronic device, improve the user experience, and expand the application scenario.

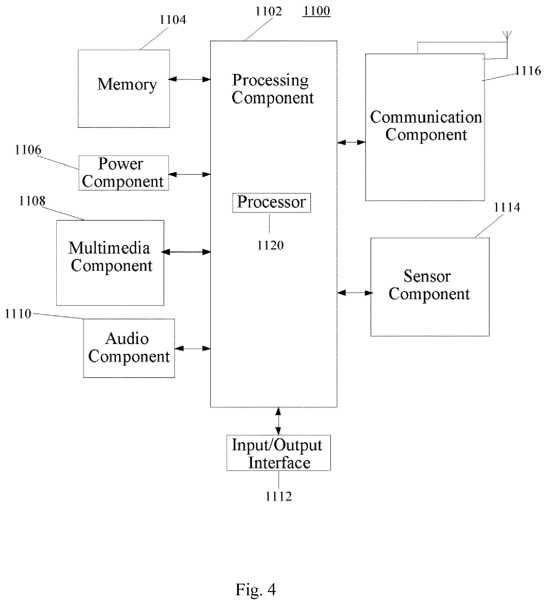

Fig. 4 is a block diagram of an electronic device 1100 according to an exemplary embodiment. For example, the electronic device 1100 may be a mobile phone, a computer, a digital broadcast terminal, a messaging device, a gaming console, a tablet, a medical device, exercise equipment, a personal digital assistant, and the like.

As shown in Fig. 4, the electronic device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the electronic device 1100, such as the operations associated with display, telephone calls, data communications, camera operations, and recording operations. The processing component 1102 may include one or more processors 1120 to execute instructions. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the electronic device 1100. Examples of such data include instructions for any applications or methods operated on the electronic device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the electronic device 1100. The power component 1106 may include a power management system, one or more power sources, and any other components associated with the generation, management, and distribution of power in the electronic device 1100.

The multimedia component 1108 includes a touch screen providing an output interface between the electronic device 1100 and the user. In some embodiments, the touch screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the electronic device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the electronic device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the electronic device 1100. For instance, the sensor component 1114 may detect an open/closed status of the electronic device 1100, relative positioning of components, e.g., the display and the keypad, of the electronic device 1100, a change in position of the electronic device 1100 or a component of the electronic device 1100, a presence or absence of user contact with the electronic device 1100, an orientation or an acceleration/deceleration of the electronic device 1100, and a change in temperature of the electronic device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the electronic device 1100 and other devices. The electronic device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components.

In exemplary embodiments, there is also provided a non-transitory computer-readable storage medium including instructions, such as included in the memory 1104, executable by the processor 1120 in the electronic device 1100. For example, the non-transitory computer-readable storage medium may be a ROM, a RAM, a CD-ROM, a magnetic tape, a floppy disc, an optical data storage device, and the like.

The electronic device 1100 may be the electronic device body according to the above embodiments. In this embodiment, the electronic device 1100 may be connected to an external antenna via an interface, in addition to the built-in antenna.

Optionally, the external antenna includes an antenna body and a connecting wire;

one end of the connecting wire is connected to the antenna body, and the other end of the connecting wire is connected to the electronic device 1100 via the interface.

Optionally, the interface is a charging interface.

Optionally, the other end of the connecting wire has a shape adapted to the charging interface.

Optionally, the interface is an audio interface.

Optionally, the other end of the connecting wire has a shape adapted to the audio interface.

Optionally, the connecting wire has a length between 5 cm and 20 cm.

Optionally, the external antenna supports at least one of the network modes: a 2G network mode, a 3G network mode, a 4G network mode, a 5G network mode, and a WIFI network mode.

Optionally, the built-in antenna is provided in four.

Optionally, a first built-in antenna and a second built-in antenna are disposed in an upper portion of the electronic device 1100, and a third built-in antenna and a fourth built-in antenna are disposed in a lower portion of the electronic device 1100.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. An electronic device, comprising: an electronic device body, an external antenna, and a built-in antenna;
wherein the built-in antenna is disposed inside the electronic device body, and the external antenna is connected to the electronic device body via an interface of the electronic device body.

2. The electronic device according to claim 1, wherein the external antenna comprises an antenna body and a connecting wire;
one end of the connecting wire is connected to the antenna body, and the other end of the connecting wire is connected to the electronic device body via the interface.

3. The electronic device of claim 2, wherein the interface is a charging interface.

4. The electronic device of claim 3, wherein the other end of the connecting wire has a shape adapted to the charging interface.

5. The electronic device of claim 2, wherein the interface is an audio interface.

6. The electronic device of claim 5, wherein the other end of the connecting wire has a shape adapted to the audio interface.

7. The electronic device according to claim 2, wherein the connecting wire has a length between 5 cm and 20 cm.

8. The electronic device according to any one of claims 1 to 7, wherein the external antenna supports at least one of the network modes: a 2G network mode, a 3G network mode, a 4G network mode, a 5G network mode, and a WIFI network mode.

9. The electronic device according to any one of claims 1 to 7, wherein the built-in antenna is provided in four.

10. The electronic device according to claim 9, wherein a first built-in antenna and a second built-in antenna are disposed in an upper portion of the electronic device, and a third built-in antenna and a fourth built-in antenna are disposed in a lower portion of the electronic device.
